# EUROPEAN PATENT APPLICATION

(11) **EP 4 474 406 A1**
(43) Date of publication of application: **11.12.2024**
(21) Application number: 23749709.4
(22) Date of filing: 30.01.2023
(51) Int. Cl.: C08G 73/06

(54) **POLYMER**

(30) Priority: 01.02.2022 JP 2022013982
(71) Applicant: JSR Corporation, Tokyo 105-8640 (JP); NATIONAL UNIVERSITY CORPORATION, IWATE UNIVERSITY, Morioka-shi, Iwate 020-8550 (JP)
(72) Inventor: OISHI Yoshiyuki, Morioka-shi, Iwate 020-8550 (JP); TSUKAMOTO Tadashi, Morioka-shi, Iwate 020-8550 (JP); KADOTA Toshiaki, Tokyo 105-8640 (JP); IIZUKA Shunsuke, Tokyo 105-8640 (JP); OKAMOTO Koichi, Tokyo 105-8640 (JP)
(74) Representative: TBK
(86) International application number: PCT/JP2023/002847
(87) International publication number: WO 2023/149393

(57) **Abstract**

Provided is a polymer having repeating units composed of only repeating units represented by the following Formula (1) . 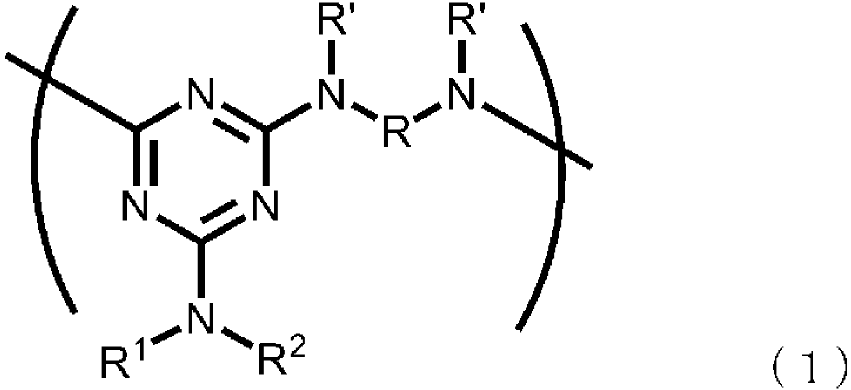 [In Formula (1), -N(R')-R-N(R')- is a structure derived from a dimer diamine which is unsubstituted or substituted with a substituent, and R', R¹, and R² are each independently a hydrogen atom, a halogen atom, a hydrocarbon group having 1 to 20 carbon atoms which is unsubstituted or substituted with a substituent, or a heterocyclic aromatic group having 3 to 20 carbon atoms which is unsubstituted or substituted with a substituent.]

## Description

### Technical Field

An embodiment of the present invention relates to a novel polymer.

In recent years, the frequency of digital signals has been increased in order to cope with an increase in the speed and capacity of data processed by highly functional mobile terminals such as smartphones and tablet personal computers. In order to improve the performance of such high frequency electronic components, it is important to design a printed wire for transmission, and it is necessary to increase the signal propagation speed without impairing the quality of high-speed digital signals including high order high frequencies.

For example, when each electronic component material is provided on, for example, a base material constituting a printed wiring board, each electronic component material is bonded to the base material using a polymer.

There are various kinds of polymers used for bonding the electronic component materials, and the polymers are required to have high adhesion to a base material and a performance suitable for a production process in addition to a low dielectric loss tangent and dielectric constant.

As the polymer, Patent Literature 1 discloses a polymer containing a pyrimidine unit, and Patent Literature 2 discloses a polyarylate.

### Citation List

### Patent Literature

Patent Literature 1: JP 2017-197725 A
Patent Literature 2: WO 2016/152295 A

### Summary of Invention

However, conventional polymers such as the polymers described in the patent literatures have room for improvement in solubility in a solvent, and in a case where the polymers are used, there is room for further improvement in easily obtaining a solution with excellent coatability (hereinafter, also simply referred to as "coatability") and adhesion of a layer obtained from the polymer to a base material (hereinafter, also simply referred to as "adhesion to a base material").

An embodiment of the present invention provides a polymer that is soluble in a general-purpose solvent and has excellent balance among heat resistance, mechanical properties, coatability, and adhesion to a base material.

### Solution to Problem

The present inventors have found that the problems can be solved by a polymer having a specific structure. Examples of aspects of the present invention are shown in the following [1] and [2].

[1] A polymer having repeating units composed of only repeating units represented by the following Formula (1). 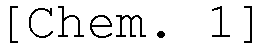 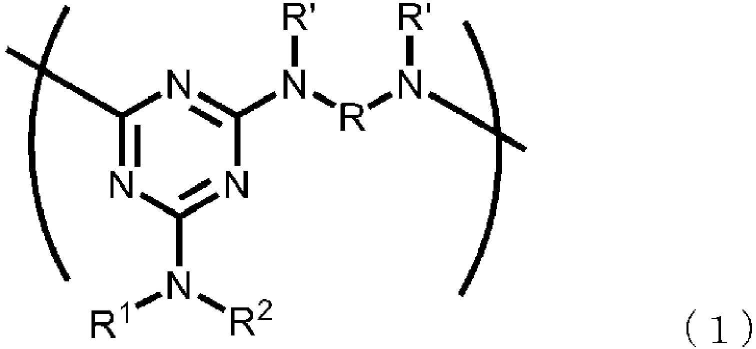 [In Formula (1), -N(R')-R-N(R')- is a structure derived from a dimer diamine which is unsubstituted or substituted with a substituent, and R', R¹, and R² are each independently a hydrogen atom, a halogen atom, a hydrocarbon group having 1 to 20 carbon atoms which is unsubstituted or substituted with a substituent, or a heterocyclic aromatic group having 3 to 20 carbon atoms which is unsubstituted or substituted with a substituent.]
[2] The polymer according to [1], which has a weight average molecular weight (Mw) in terms of polystyrene of 1,000 to 400,000.

### Advantageous Effects of Invention

According to an embodiment of the present invention, it is possible to provide a polymer that is soluble in a general-purpose solvent and has excellent balance among heat resistance, mechanical properties (in particular, tensile modulus, tensile elongation, and tensile strength), coatability, and adhesion to a base material.

### Brief Description of Drawings

Fig. 1 illustrates a ¹H-NMR spectrum of a polymer obtained in Example 1.
Fig. 2 illustrates a ¹H-NMR spectrum of a polymer obtained in Example 2.
Fig. 3 illustrates a ¹H-NMR spectrum of a polymer obtained in Example 3.
Fig. 4 illustrates a ¹H-NMR spectrum of a polymer obtained in Example 4.
Fig. 5 illustrates DSC curves of polymers obtained in Examples 1 to 4.

### Description of Embodiments

### <<Polymer>>

A polymer (hereinafter, also referred to as "the present polymer") according to an embodiment of the present invention has repeating units composed of only repeating units represented by the following Formula (1).

The polymer refers to a polymer having repeating units composed of only repeating units represented by the following Formula (1), in which a terminal thereof is not particularly limited, and for example, when a compound represented by the following Formula (A) and a compound represented by the following Formula (B) are reacted as follows to synthesize the polymer, the terminal is preferably derived from the compound represented by the following Formula (A) or the compound represented by the following Formula (B). 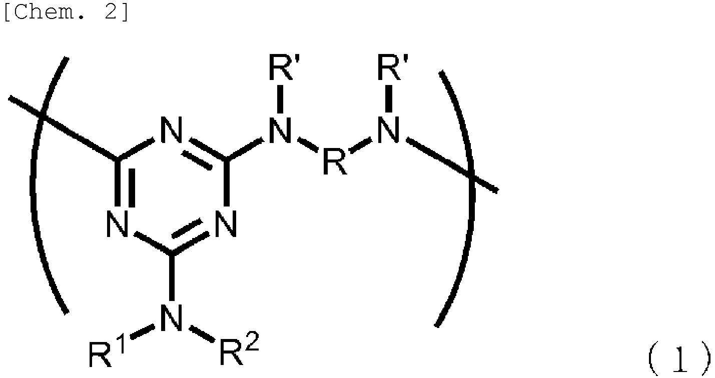 [In Formula (1), -N(R')-R-N(R')- is a structure derived from a dimer diamine which is unsubstituted or substituted with a substituent, and R', R¹, and R² are each independently a hydrogen atom, a halogen atom, a hydrocarbon group having 1 to 20 carbon atoms which is unsubstituted or substituted with a substituent, or a heterocyclic aromatic group having 3 to 20 carbon atoms which is unsubstituted or substituted with a substituent.]

Examples of the structure derived from a dimer diamine which is unsubstituted or substituted with a substituent include a divalent dimer acid type diamine residue derived from a dimer acid type diamine or group in which at least a part of the divalent dimer acid type diamine residue is substituted with a substituent.

The dimer acid type diamine refers to a diamine obtained by substituting two terminal carboxylic acid groups (-COOH) of a dimer acid (cyclic and acyclic dimer acids (containing 36 carbon atoms as main components) obtained as dimers of unsaturated fatty acids (18 carbon atoms)) with, for example, a primary aminomethyl group (-CH₂-NH₂) or an amino group (-NH₂).

The dimer acid type diamine is a compound derived from a dimer acid which is a dimer of an unsaturated fatty acid such as oleic acid (see, for example, JP H09-12712 A), and various known dimer diamines can be used without particular limitation.

A dimer acid is a known dibasic acid obtained by an intermolecular polymerization reaction of an unsaturated fatty acid, the industrial production process thereof is almost standardized in the industry, and the dimer acid is usually obtained by dimerizing an unsaturated fatty acid having 11 to 22 carbon atoms with, for example, a clay catalyst. The dimer acid industrially obtained usually contain a dibasic acid having 36 carbon atoms obtained by dimerizing an unsaturated fatty acid having 18 carbon atoms such as oleic acid or linoleic acid as main component, and contains a predetermined amount of a monomer acid (18 carbon atoms), a trimer acid (54 carbon atoms), or another polymerized fatty acid having 20 to 54 carbon atoms depending on the degree of purification. In an embodiment of the present invention, it is preferable to use a dimer acid in which a dimer acid content has been increased to 90% by weight or more by molecular distillation. In addition, in a case where a double bond remains after the dimerization reaction, in an embodiment of the present invention, one obtained by reducing the degree of unsaturation by subjecting to a hydrogenation reaction is also included in the dimer acid.

When the present polymer has a structure derived from a dimer acid type diamine, characteristics derived from a skeleton of the dimer acid, specifically, the following characteristics can be imparted to the present polymer. Since the dimer acid type diamine is an aliphatic compound including a plurality of isomeric structures of macromolecules having a molecular weight of about 500 to 620, a molar volume of the present polymer can be increased, and the amount of polar groups in the present polymer can be relatively reduced. It is considered that such characteristics of the dimer acid type diamine contribute to improving dielectric properties while suppressing decrease in heat resistance of the present polymer. In addition, in a case where the dimer acid type diamine has two freely moving hydrophobic chains having 4 to 9 carbon atoms and two chain aliphatic amino groups having a length close to that of 8 to 10 carbon atoms, a structure derived from the dimer acid type diamine not only imparts flexibility to the present polymer, but also allows the present polymer to have a non-objective chemical structure and/or a non-planar chemical structure. Therefore, it is considered that the solubility of the present polymer can be improved.

Hereinafter, a non-limiting structural formula of the dimer diamine will be shown. In the following formulas, m + n = 6 to 17, p + q = 8 to 19, and a wavy line part means a carbon-carbon single bond or a carbon-carbon double bond.

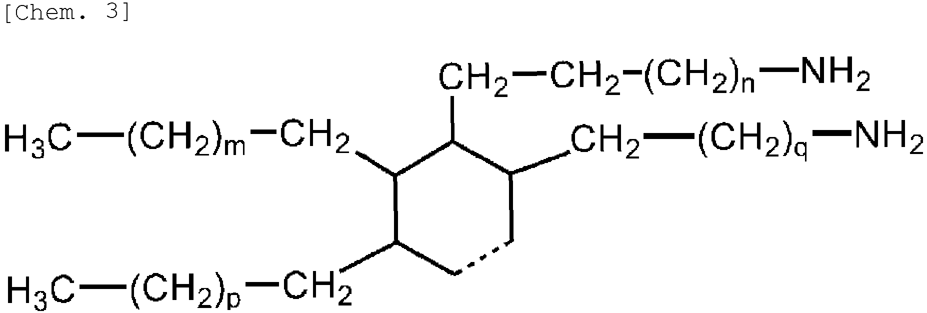

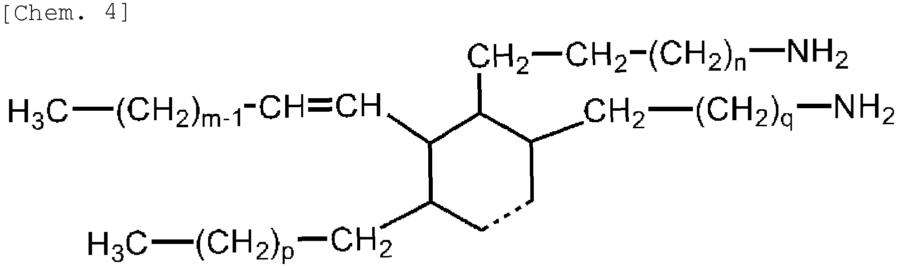

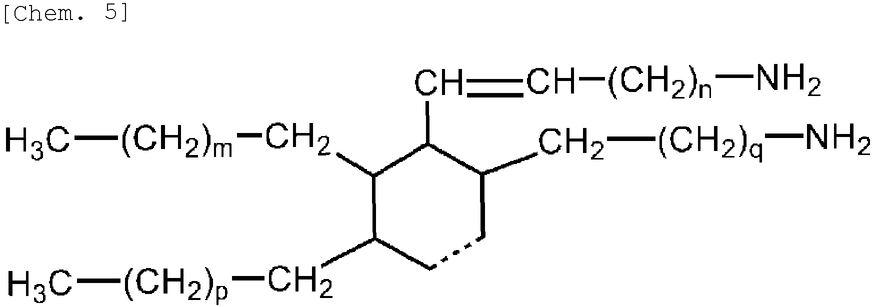

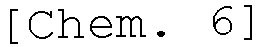

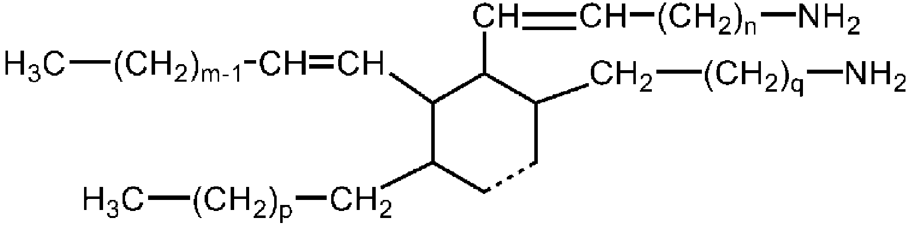

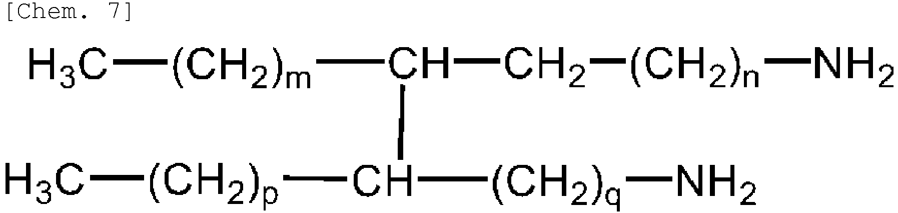

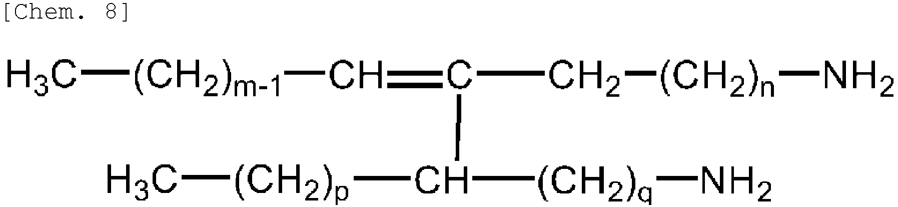

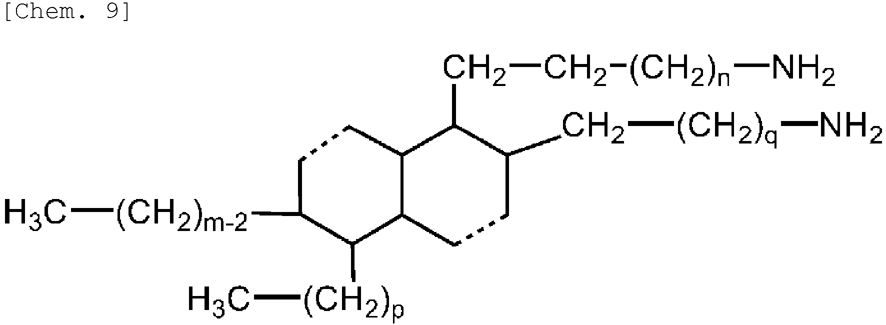

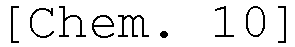

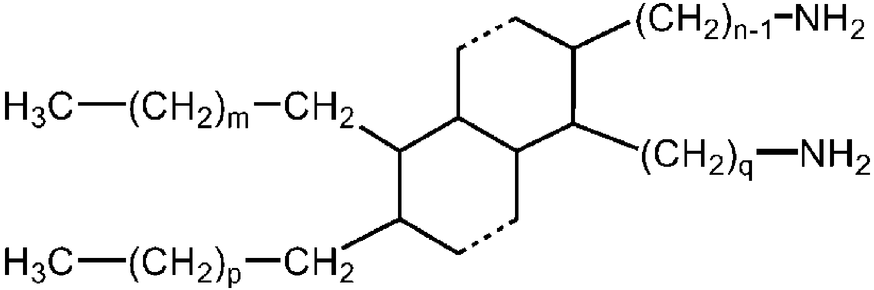

The dimer diamine is preferably a compound having an active hydrogen equivalent of 130 to 140 and an amine value of 180 to 220.

Examples of commercially available products of the dimer acid type diamine include Versamine 551 (manufactured by BASF Japan Ltd.) and Versamine 552 (manufactured by Cognis Japan Ltd.; a hydrogenated product of Versamine 551), and Priamine 1075 and Priamine 1074 (all manufactured by Croda Japan KK).

Examples of the halogen atom in R', R¹, and R² include a fluorine atom, a chlorine atom, a bromine atom, and an iodine atom.

Examples of the hydrocarbon group having 1 to 20 carbon atoms in R', R¹, and R² include a monovalent chain hydrocarbon group, a monovalent alicyclic hydrocarbon group, a monovalent aromatic hydrocarbon group, or a group obtained by combining these groups, and examples of the heterocyclic aromatic group having 3 to 20 carbon atoms in R', R¹, and R² include a monovalent heterocyclic aromatic group. These hydrocarbon group and heterocyclic aromatic group may be substituted with a substituent.

Examples of the monovalent chain hydrocarbon group include alkyl groups such as a methyl group, an ethyl group, an n-propyl group, an isopropyl group, an n-butyl group, an isobutyl group, a sec-butyl group, a tert-butyl group, and an n-pentyl group; alkenyl groups such as an ethenyl group, a propenyl group, a butenyl group, and a pentenyl group; and alkynyl groups such as an ethynyl group, a propynyl group, a butynyl group, and a pentynyl group.

Examples of the monovalent alicyclic hydrocarbon group include monocyclic cycloalkyl groups such as a cyclopropyl group, a cyclobutyl group, a cyclopentyl group, and a cyclohexyl group; polycyclic cycloalkyl groups such as a norbornyl group and an adamantyl group; monocyclic cycloalkenyl groups such as a cyclopropenyl group, a cyclobutenyl group, a cyclopentenyl group, and a cyclohexenyl group; and polycyclic cycloalkenyl groups such as a norbornenyl group.

Examples of the monovalent aromatic hydrocarbon group include aryl groups such as a phenyl group, a tolyl group, a xylyl group, a naphthyl group, and an anthryl group.

Examples of the group obtained by combining these groups include aralkyl groups such as a benzyl group, a phenethyl group, a phenylpropyl group, and a naphthylmethyl group.

Examples of the monovalent heterocyclic aromatic group include monovalent heterocyclic aromatic groups derived from heterocyclic rings such as thiophene, benzothiophene, pyrrole, imidazole, pyrazole, pyridine, pyrazine, pyrimidine, pyridazine, triazine, indole, isoindole, benzimidazole, purine, indazole, quinoline, isoquinoline, quinoxaline, quinazoline, cinnoline, furan, benzofuran (1-benzofuran), isobenzofuran (2-benzofuran), oxazole, isoxazole, thiazole, benzoxazole, benzisoxazole, and benzothiazole.

The substituent in the structure derived from the dimer diamine and the substituents in the hydrocarbon group having 1 to 20 carbon atoms and the heterocyclic aromatic group having 3 to 20 carbon atoms in R', R¹, and R² are not particularly limited, and examples thereof include an allyl group, a halogen atom, a monovalent hydrocarbon group having 1 to 20 carbon atoms, a monovalent halogenated hydrocarbon group having 1 to 20 carbon atoms, an alkoxy group having 1 to 20 carbon atoms, an alkoxycarbonyl group having 1 to 20 carbon atoms, an alkylthio group having 1 to 20 carbon atoms, a nitro group, a cyano group, a carboxy group, a sulfonic acid group, a phosphonic acid group, a phosphoric acid group, a hydroxy group, primary to tertiary amino groups, a salt of a carboxy group, a salt of a sulfonic acid group, a salt of a phosphonic acid group, a salt of a phosphoric acid group, a salt of a hydroxy group, and salts of primary to tertiary amino groups.

R' is preferably a hydrogen atom.

In a case where R¹ or R² is a hydrogen atom, an interaction occurs due to a hydrogen bond between the hydrogen atom and a heteroatom site or a triazine ring site other than a nitrogen atom to which the hydrogen atom is bonded, and the polymer tends to have relatively excellent adhesion to the base material, which is preferable.

Regarding the repeating unit represented by Formula (1), the number of repeating units is not particularly limited, and is, for example, 2 to 10,000, preferably 3 to 8,000, and more preferably 3 to 5,000.

In a case where the present polymer has a structural unit derived from a compound represented by the following Formula (A) and a structural unit derived from a compound represented by the following Formula (B), when a total of the structural unit derived from the compound represented by the following Formula (A) and the structural unit derived from the compound represented by the following Formula (B) is 100 mol%, a ratio of the structural units derived from the compound represented by the following Formula (A) is preferably 40 mol% or more and 60 mol% or less, more preferably 43 mol% or more and 57 mol% or less, and still more preferably 45 mol% or more and 55 mol% or less and a ratio of the structural units derived from the compound represented by the following Formula (B) is preferably 40 mol% or more and 60 mol% or less, more preferably 43 mol% or more and 57 mol% or less, and still more preferably 45 mol% or more and 55 mol% or less.

In a case where the present polymer has the structural unit derived from the compound represented by the following Formula (A) and the structural unit derived from the compound represented by the following Formula (B), the structural unit derived from the compound represented by the following Formula (A) in the present polymer may be one kind or two or more kinds. In addition, the structural unit derived from the compound represented by the following Formula (B) in the present polymer may be one kind or two or more kinds.

### <Physical Properties of Present Polymer or Others>

A weight average molecular weight (Mw) of the present polymer in terms of polystyrene is preferably 1,000 to 200,000, more preferably 3,000 to 100,000, and still more preferably 3,000 to 70,000 from the viewpoint of, for example, obtaining a polymer which has solubility in a general-purpose organic solvent, has excellent coatability on a base material, and has excellent heat resistance.

A glass transition temperature (Tg) of the present polymer, measured with a differential scanning calorimeter (DSC) is preferably -50°C to 200°C, and more preferably -0°C to 150°C.

Specifically, the Tg can be measured by a method described in the following examples.

A 5% weight loss temperature (Td5) of the present polymer measured by thermogravimetric analysis (TGA) is preferably 300°C to 600°C, more preferably 350°C to 600°C, and still more preferably 400°C to 500°C.

The present polymer having Td5 in the above range can be said to be a polymer which has excellent heat resistance.

Specifically, Td5 can be measured by a method described in the following examples.

A tensile elongation of the present polymer is preferably 30% to 700%, more preferably 160% to 500%, and still more preferably 170% to 500%.

The present polymer having a tensile elongation in the above range can be said to be a polymer which has excellent mechanical properties.

Specifically, the tensile elongation can be measured by a method described in the following examples.

A dielectric loss tangent of the present polymer is preferably 0.0060 or less and more preferably 0.0050 or less from the viewpoint of, for example, being able to reduce a transmission loss when the present polymer is used, and a lower limit thereof is not particularly limited, and is preferably 0.0005 or more.

Specifically, the dielectric loss tangent can be measured by a method described in the following examples.

The present polymer is soluble in a general-purpose solvent and has excellent solubility in a general-purpose solvent.

Here, examples of the general-purpose solvent include solvents having a boiling point of 180°C or lower at atmospheric pressure, and specific examples thereof include cyclohexanone and cyclopentanone.

In a case where 1 g or more of the present polymer dissolves in 100 g of a solvent at 25°C, it can be said that the present polymer is soluble in the solvent. Whether or not the present polymer dissolves can be determined by the presence or absence of a precipitate.

When the present polymer is soluble in a solvent, a solution in which the present polymer dissolves in the solvent can be obtained, and the solution has excellent coatability and drying property, which is preferable.

The present polymer (a layer obtained from the polymer) has excellent adhesion to a base material.

The base material is not particularly limited, and is preferably a metal base material such as gold, silver, copper, stainless steel, iron, nickel, beryllium, aluminum, zinc, indium, tin, zirconium, tantalum, titanium, lead, magnesium, manganese, and alloys thereof; and a base material provided with a layer (for example, wiring) of these metals and/or the alloys thereof, such as a polyester resin film such as a polyethylene terephthalate film and a polybutylene terephthalate film, an olefin resin film such as a polyethylene film and a polypropylene film, a cycloolefin resin film, and a polyimide resin film.

### <Method for Synthesizing Present Polymer>

The present polymer can be produced, for example, using a condensation reaction between a conventionally known dihalogenated triazine compound and a dimer diamine. Specifically, as described in Examples, an example thereof will be described.

The present polymer can be synthesized by, for example, heating and polymerizing a compound represented by the following Formula (A) and a dimer diamine represented by the following Formula (B) in an appropriate organic solvent such as N-methyl-2-pyrrolidone (NMP) or N,N-dimethylacetamide (DMAc) in the presence of an alkali metal compound such as potassium carbonate. 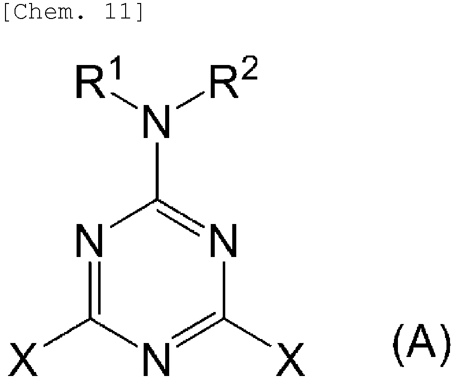 [In Formula (A), R¹ and R² have the same meanings as R¹ and R² in Formula (1), respectively, and X is a halogen atom.] 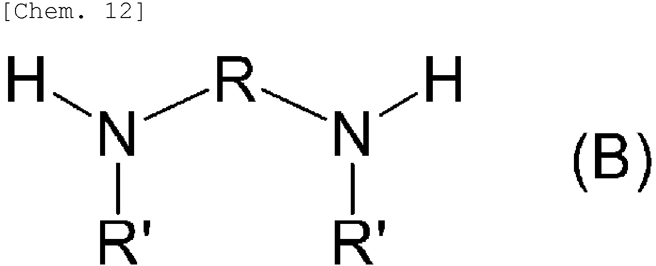 [In Formula (B), -N(R')-R-N(R')- is a structure derived from a dimer diamine which is unsubstituted or substituted with a substituent, and R' independently has the same meaning as R' in Formula (1).]

Conditions of the heating are not particularly limited as long as a polymerization reaction proceeds, and from the viewpoint of, for example, suppressing side reactions, a heating temperature is preferably 0°C to 150°C and more preferably 10°C to 130°C, and heating time is preferably 0.5 to 100 hours and more preferably 1 to 24 hours.

In particular, the heating temperature is preferably about 40°C to 110°C and the heating time is 4 to 24 hours from the viewpoint of, for example, obtaining the present polymer with less coloration, and the heating temperature is more preferably about 50°C to 100°C from the viewpoint of, for example, obtaining the present polymer having a high molecular weight with less low molecular weight components.

Regarding a using ratio of the compound represented by Formula (A) and the compound represented by Formula (B), in a case where a total of the compound represented by Formula (A) and the compound represented by Formula (B) is 100 mol%, the compound represented by Formula (A) is preferably 40 mol% or more and 60 mol% or less, more preferably 43 mol% or more and 57 mol% or less, and still more preferably 45 mol% or more and 55 mol% or less, and the compound represented by Formula (B) is preferably 40 mol% or more and 60 mol% or less, more preferably 43 mol% or more and 57 mol% or less, and still more preferably 45 mol% or more and 55 mol% or less.

The compound represented by Formula (A) may be used singly or two or more kinds thereof may be used. Also, the compound represented by Formula (B) may be used singly or two or more kinds thereof may be used.

Examples of the alkali metal compound include alkali metals such as lithium, potassium, and sodium; alkali metal hydrides such as lithium hydride, potassium hydride, and sodium hydride; alkali metal hydroxides such as lithium hydroxide, potassium hydroxide, and sodium hydroxide; alkali metal carbonates such as lithium carbonate, potassium carbonate, and sodium carbonate; alkali metal hydrogen carbonates such as lithium hydrogen carbonate, potassium hydrogen carbonate, and sodium hydrogen carbonate; alkali metal alkoxides such as sodium ethoxide; alkali metal acetates such as sodium acetate and potassium acetate; alkali metal oxide such as lithium oxide; alkali metal phosphates such as trilithium phosphate, trisodium phosphate, and tripotassium phosphate; and alkali metal fluorides such as cesium fluoride. Among these, for example, potassium carbonate, potassium hydroxide, sodium carbonate, sodium hydroxide, sodium hydrogen carbonate, sodium ethoxide, sodium acetate, lithium carbonate, lithium hydroxide, lithium oxide, potassium acetate, trilithium phosphate, trisodium phosphate, tripotassium phosphate, and cesium fluoride are preferable.

The alkali metal compound may be used singly or two or more kinds thereof may be used.

In addition, when the reaction is performed, an organic base may be used, and specific examples thereof include ammonia, trimethylamine, triethylamine, diisopropylmethylamine, diisopropylethylamine, N-methylpiperidine, 2,2,6,6-tetramethyl-N-methylpiperidine, pyridine, 4-dimethylaminopyridine, and N-methylmorpholine.

The organic base may be used singly or two or more kinds thereof may be used.

As for a use amount of the alkali metal compound, the amount of the alkali metal atom in the alkali metal compound is usually 1.0 to 3.0 times equivalent, preferably 1.0 to 2.5 times equivalent, and more preferably 1.0 to 2.0 times equivalent to one -NH-R' in the compound represented by Formula (B).

### Examples

Hereinafter, an embodiment of the present invention will be described specifically based on Examples, but the present invention is not limited to these Examples. Note that "%" in the following is based on weight unless otherwise specified.

### <¹H-NMR Spectrum>

A ¹H-NMR spectrum of the polymer was obtained using a nuclear magnetic resonance apparatus ("ECX 400P" manufactured by JEOL Ltd.) and using deuterated chloroform as a measurement solvent.

### [Example 1]

4,6-Dichloro-N,N-diphenyl-1,3,5-triazine-2-amine (PDCT) (16.3 g), dimer diamine (Priamine 1075, manufactured by Croda Japan K.K.) (27.5 g), and potassium carbonate (7.8 g) were weighed into a four-neck separable flask equipped with a stirrer, N-methyl-2-pyrrolidone (71.4 g) and water (30.6 g) were added thereto, and the mixture was reacted at 100°C for 20 hours under a nitrogen atmosphere. After completion of the reaction, methanol coagulation, filtration, and methanol washing were performed to obtain 32 g (yield 80%) of a target polymer composed of repeating units represented by the following formula.

Since the dimer diamine is not a single substance as described above, a structure derived from the dimer diamine represented by the following formula represents a representative structure thereof. The same applies to formulas described in the following Examples.

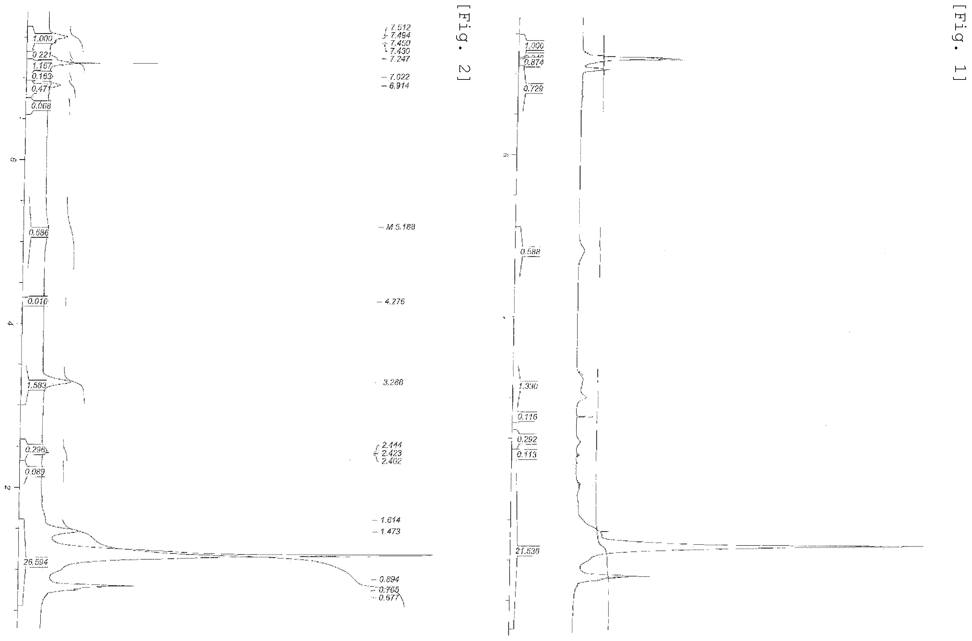

The ¹H-NMR spectrum of the obtained polymer is shown in Fig. 1.

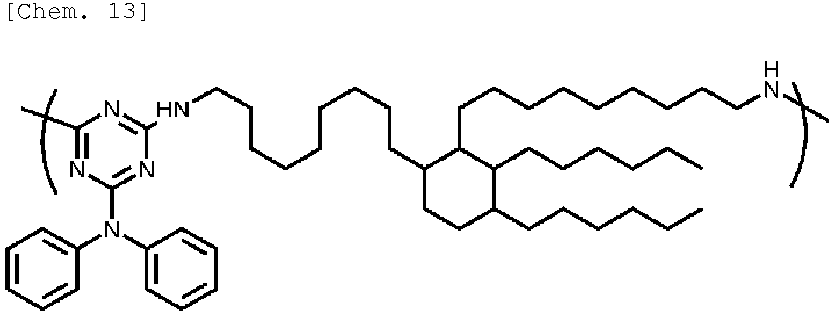

### [Example 2]

4,6-Dichloro-N,N-dimethyl-1,3,5-triazine-2-amine (MDCT) (11.8 g), dimer diamine (Priamine 1075) (32.7 g), and potassium carbonate (9.3 g) were weighed into a four-neck separable flask equipped with a stirrer, N-methyl-2-pyrrolidone (72.6 g) and water (31.1 g) were added thereto, and the mixture was reacted at 100°C for 20 hours under a nitrogen atmosphere. After completion of the reaction, methanol coagulation, filtration, and methanol washing were performed to obtain 35 g (yield 88%) of a target polymer composed of repeating units represented by the following formula.

The ¹H-NMR spectrum of the obtained polymer is shown in Fig. 2.

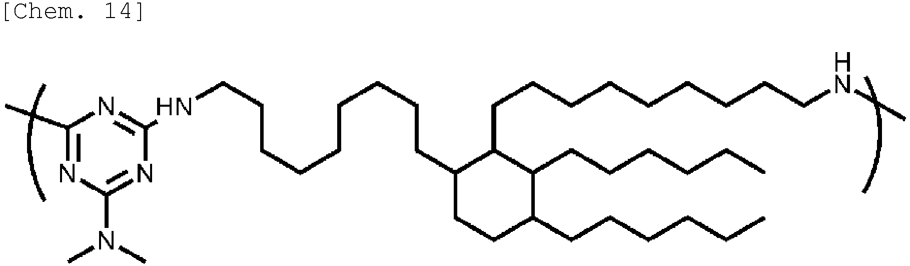

### [Example 3]

4,6-Dichloro-1,3,5-triazine-2-amine (ADCT) (10.5 g), dimer diamine (Priamine 1075) (34.1 g), and potassium carbonate (9.7 g) were weighed into a four-neck separable flask equipped with a stirrer, N-methyl-2-pyrrolidone (72.9 g) and water (31.3 g) were added thereto, and the mixture was reacted at 100°C for 20 hours under a nitrogen atmosphere. After completion of the reaction, methanol coagulation, filtration, and methanol washing were performed to obtain 30 g (yield 75%) of a target polymer composed of repeating units represented by the following formula.

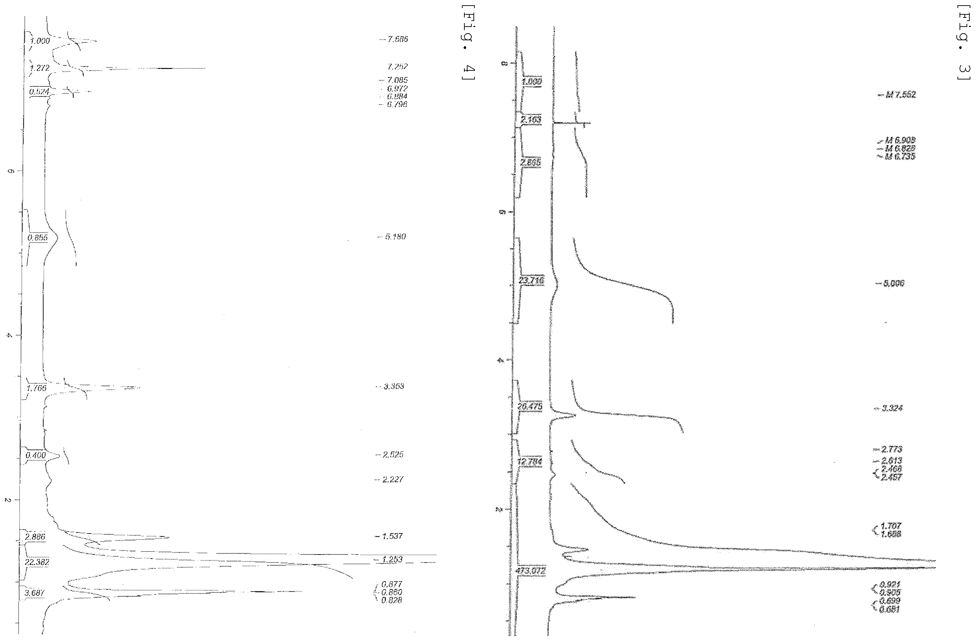

The ¹H-NMR spectrum of the obtained polymer is shown in Fig. 3.

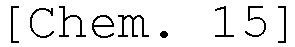

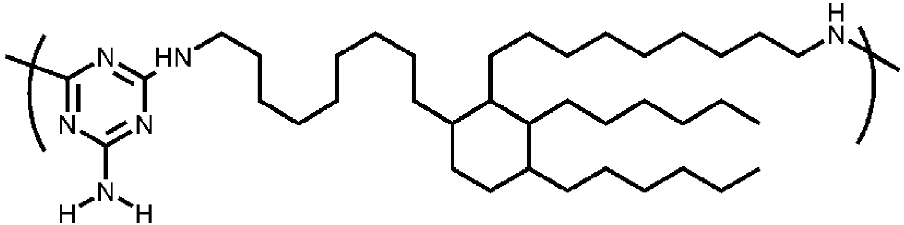

### [Example 4]

2-Phenylamino-4,6-dichloro-s-triazine (AnDCT) (13.2 g), dimer diamine (Priamine 1075) (30.8 g), and potassium carbonate (8.7 g) were weighed into a four-neck separable flask equipped with a stirrer, N-methyl-2-pyrrolidone (71.9 g) and water (30.8 g) were added thereto, and the mixture was reacted at 100°C for 20 hours under a nitrogen atmosphere. After completion of the reaction, methanol coagulation, filtration, and methanol washing were performed to obtain 31 g (yield 76%) of a target polymer composed of repeating units represented by the following formula.

The ¹H-NMR spectrum of the obtained polymer is shown in Fig. 4.

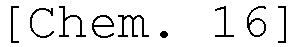

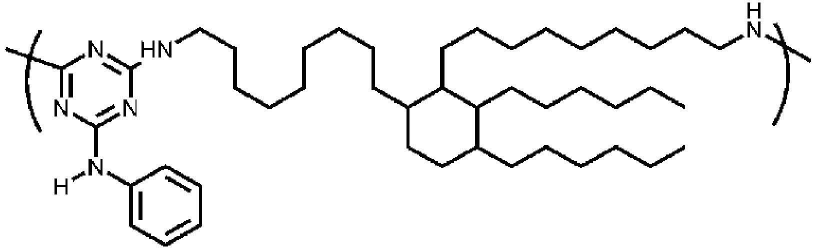

### [Example 5]

35 g (yield: 88%) of a target polymer was obtained by performing the same operations as those of Example 4 except that charged amounts were changed to 2-phenylamino-4,6-dichloro-s-triazine (AnDCT) (13.5 g), dimer diamine (Priamine 1075) (30.6 g), potassium carbonate (8.7 g), N-methyl-2-pyrrolidone (72.0 g), and water (30.9 g).

### [Example 6]

37 g (yield: 93%) of a target polymer was obtained by performing the same operations as those of Example 4 except that charged amounts were changed to 2-phenylamino-4,6-dichloro-s-triazine (AnDCT) (13.6 g), dimer diamine (Priamine 1075) (30.5 g), potassium carbonate (8.7 g), N-methyl-2-pyrrolidone (72.0 g), and water (30.9 g).

### [Example 7]

38 g (yield: 95%) of a target polymer was obtained by performing the same operations as those of Example 4 except that charged amounts were changed to 2-phenylamino-4,6-dichloro-s-triazine (AnDCT) (13.7 g), dimer diamine (Priamine 1075) (30.4 g), potassium carbonate (8.6 g), N-methyl-2-pyrrolidone (72.1 g), and water (30.9 g).

### [Example 8]

29 g (yield: 73%) of a target polymer was obtained by performing the same operations as those of Example 4 except that charged amounts were changed to 2-phenylamino-4,6-dichloro-s-triazine (AnDCT) (11.9 g), dimer diamine (Priamine 1075) (31.7 g), potassium carbonate (9.0 g), N-methyl-2-pyrrolidone (71.2 g), and water (30.5 g).

### [Comparative Example 1]

A commercially available ULTIMID 3000A (manufactured by ABC Nanotech., LTD.), which is a flexible bismaleimide oligomer, was used as Comparative Example 1.

### [Comparative Example 2]

A commercially available jER 872 (manufactured by Mitsubishi Chemical Corporation) which is a flexible bisphenol A type epoxy resin was used as Comparative Example 2.

### [Comparative Example 3]

2,4-Dichloro-6-phenoxy-1,3,5-triazine (24.3g), 2,2-bis(4-hydroxyphenyl) propane (23.0 g), and potassium carbonate (15.3 g) were weighed into a four-neck separable flask equipped with a stirrer, N-methyl-2-pyrrolidone (77.3 g) and water (33.1 g) were added thereto, and the mixture was reacted at 100°C for 20 hours under a nitrogen atmosphere. After completion of the reaction, methanol coagulation, filtration, and methanol washing were performed to obtain 31 g (yield 78%) of a target polymer composed of repeating units represented by the following formula.

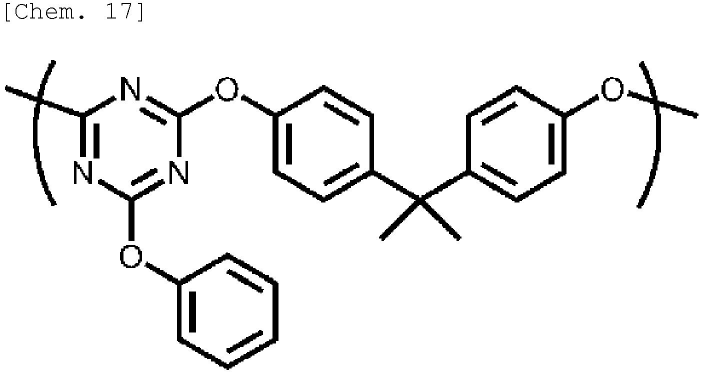

### [Comparative Example 4]

2,4-Dichloro-6-phenoxy-1,3,5-triazine (26.1 g), bis(4-hydroxyphenyl) ether (21.8 g), and potassium carbonate (16.4 g) were weighed into a four-neck separable flask equipped with a stirrer, N-methyl-2-pyrrolidone (78.1 g) and water (33.5 g) were added thereto, and the mixture was reacted at 100°C for 20 hours under a nitrogen atmosphere. After completion of the reaction, methanol coagulation, filtration, and methanol washing were performed to obtain 30 g (yield 75%) of a target polymer.

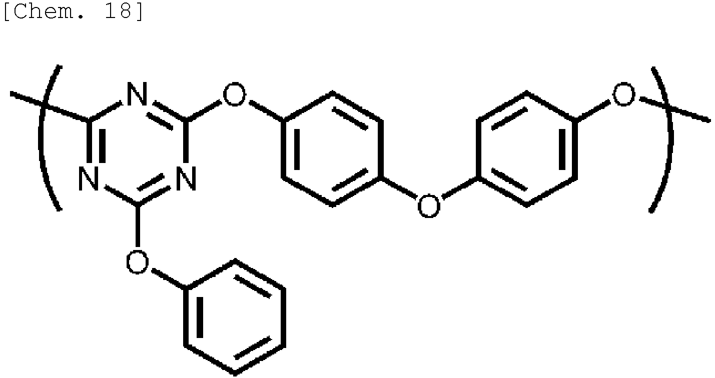

### [Comparative Example 5]

2-Phenylamino-4,6-dichloro-s-triazine (AnDCT) (24.4 g), 4,4'-diaminobenzanilide (23.0 g), and potassium carbonate (15.4 g) were weighed into a four-neck separable flask equipped with a stirrer, N-methyl-2-pyrrolidone (77.4 g) and water (33.2 g) were added thereto, and the mixture was reacted at 100°C for 20 hours under a nitrogen atmosphere. After completion of the reaction, methanol coagulation, filtration, and methanol washing were performed to obtain 30 g (yield 75%) of a target polymer composed of repeating units represented by the following formula.

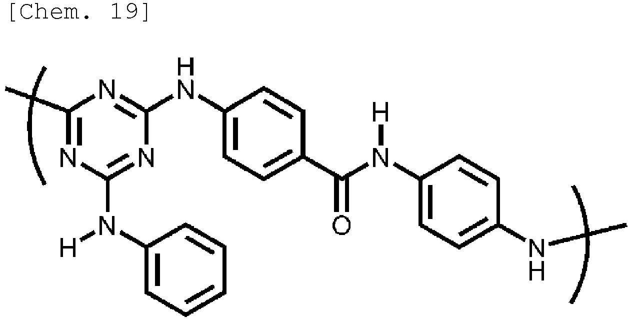

### [Comparative Example 6]

2-Phenylamino-4,6-dichloro-s-triazine (AnDCT) (29.9 g), bis(aminomethyl) norbornane (19.1 g), and potassium carbonate (18.9 g) were weighed into a four-neck separable flask equipped with a stirrer, N-methyl-2-pyrrolidone (80.1 g) and water (34.3 g) were added thereto, and the mixture was reacted at 100°C for 20 hours under a nitrogen atmosphere. After completion of the reaction, methanol coagulation, filtration, and methanol washing were performed to obtain 29 g (yield 73%) of a target polymer composed of repeating units represented by the following formula.

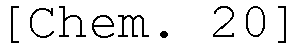

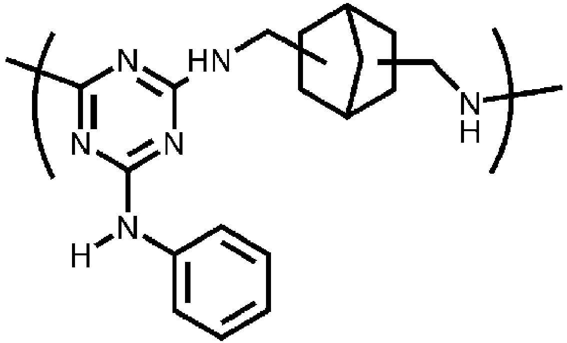

### [Comparative Example 7]

2-Phenylamino-4,6-dichloro-s-triazine (AnDCT) (26.2 g), 1,12-diaminododecane (21.7 g), and potassium carbonate (16.5 g) were weighed into a four-neck separable flask equipped with a stirrer, N-methyl-2-pyrrolidone (78.3 g) and water (33.5 g) were added thereto, and the mixture was reacted at 100°C for 20 hours under a nitrogen atmosphere. After completion of the reaction, methanol coagulation, filtration, and methanol washing were performed to obtain 31 g (yield 78%) of a target polymer composed of repeating units represented by the following formula.

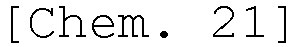

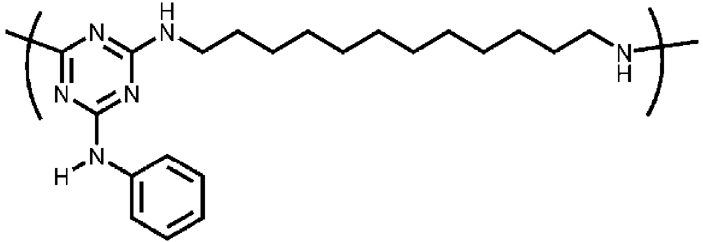

### [Comparative Example 8]

1,1-Bis(4-hydroxyphenyl)-3,3,5-trimethylcyclohexane (15.5 g), 4,4'-dichlorodiphenylsulfone (14.4 g), and potassium carbonate (9.3 g) were weighed into a four-neck separable flask equipped with a stirrer, and N-methylpyrrolidone (128 g) and toluene (50 g) were added thereto and stirred. Toluene was refluxed under nitrogen for several hours, then toluene was distilled off, and the mixture was further reacted at 190°C for 6 hours. After completion of the reaction, N-methylpyrrolidone (398 g) was added thereto for dilution, and a salt was filtered with filter paper, then the filtrate was coagulated with methanol (10.5 kg). A coagulated powder was filtered off, and the powder was washed again with a small amount of methanol and then filtered off, and the residue was dried at 120°C for 12 hours under reduced pressure using a vacuum dryer to obtain 23 g (yield 89%) of a target polymer composed of repeating units represented by the following formula.

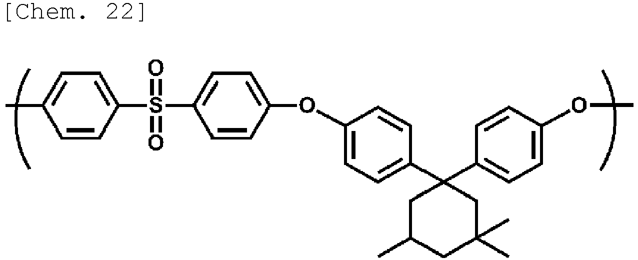

### [Comparative Example 9]

In accordance with a method described in Macromolecules, 3, 533-535 (1970), a target polymer composed of repeating units represented by the following formula was obtained.

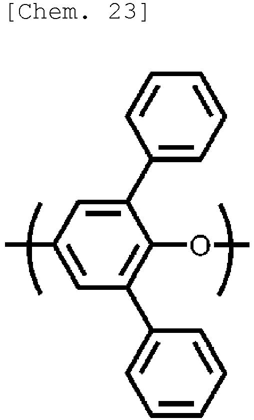

### [Evaluation of Physical Properties of Polymer]

Using each polymer obtained as described above, a weight average molecular weight (Mw), a glass transition temperature (Tg), a 5% weight loss temperature (Td5), solubility in a general-purpose organic solvent, coatability, mechanical properties (tensile modulus, tensile elongation, and tensile strength), adhesion to a base material, and a dielectric loss tangent were evaluated according to the following methods. The evaluation results are shown in Table 1.

"-" in Table 1 means that the corresponding evaluation item is not measured.

### <Weight Average Molecular Weight (Mw)>

The weight average molecular weight (Mw) of each polymer was measured using a GPC apparatus ("HLC-8320 type and 8420 type" manufactured by Tosoh Corporation), under the following THF conditions in a case where the obtained polymer dissolved in tetrahydrofuran (THF) (Examples 1 to 8), and under the following N-methyl-2-pyrrolidone conditions in a case where the obtained polymer was insoluble in THF (Comparative Examples 3 to 9). In Comparative Example 7, some thereof were insoluble in N-methyl-2-pyrrolidone, but the Mw was measured using a soluble portion.

### · THF Conditions

Column: which was obtained by connecting "TSKgel α-M" manufactured by Tosoh Corporation and "TSKgel guard column α" manufactured by Tosoh Corporation
Developing solvent: THF
Column temperature: 40°C
Flow rate: 1.0 mL/min
Sample concentration: 0.75% by weight
Sample injection amount: 50 µL
Detector: Differential refractometer
Standard substance: Monodisperse polystyrene

### · N-methyl-2-pyrrolidone conditions

Column: which was obtained by connecting "TSKgel α-M" manufactured by Tosoh Corporation and "TSKgel guard column α" manufactured by Tosoh Corporation
Developing solvent: N-methyl-2-pyrrolidone (LiBr 10 mM added)
Column temperature: 40°C
Flow rate: 1.0 mL/min
Sample concentration: 0.75% by weight
Sample injection amount: 50 µL
Detector: Differential refractometer
Standard substance: Monodisperse polystyrene

### <Glass Transition Temperature (Tg)>

The glass transition temperature (Tg) of each polymer was defined as a temperature corresponding to the intersection of a baseline and a tangent line at the inflection point in a DSC heating curve of a thermogram obtained at a heating rate of 20°C/min in a nitrogen atmosphere using a differential scanning calorimeter (DSC apparatus "Thermo Plus DSC 8230" manufactured by Rigaku Corporation). The inflection point was defined as a temperature corresponding to a peak in a DDSC curve which is a differential curve of a DSC heating curve. In addition, in order to confirm the baseline of DSC, the DDSC curve was appropriately referred to.

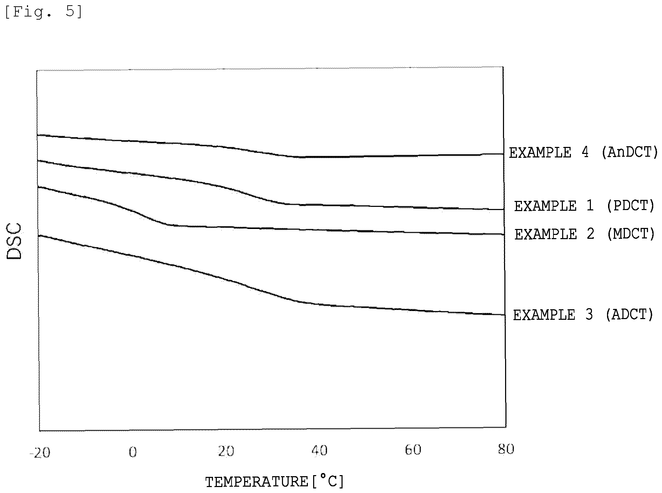

The DSC curves of the polymers obtained in Examples 1 to 4 are shown in Fig. 5.

### <Softening Point: TMA Inflection Point>

For a polymer whose measurement of the glass transition temperature (Tg) was difficult or whose glass transition temperature was unclear, a softening point was determined from a TMA inflection point. The softening point was defined as a temperature corresponding to the intersection of a tangent line of a baseline and a tangent line of the line (post-inflection line) shown in a graph after the polymer was greatly deformed at a certain temperature in a thermal displacement curve of a thermogram obtained at a heating rate of 5°C/min using a thermomechanical analyzer ("TMA 7100" manufactured by Hitachi High-Tech Science Corporation).

### <5% Weight Loss Temperature (Td5)>

The 5% weight loss temperature (Td5) of each polymer was defined as a temperature at which the weight of the polymer decreased by 5% by weight in total from a thermogravimetric curve obtained under a nitrogen atmosphere at a heating rate of 10°C/min using a differential thermal balance ("TG 209 F1 Libra" manufactured by NETZSCH). Note that Td5 is one of indices of heat resistance, and it can be evaluated that the larger the value of Td5, the better the heat resistance.

### <Solubility in General-Purpose Organic Solvent>

The solubility of each polymer in an organic solvent was evaluated by adding each polymer to cyclohexanone (CHN) or cyclopentanone (CPN) so as to have a concentration of 1% by weight, stirring the mixture, and then a case where a precipitate was not visually confirmed was evaluated as "O", and a case where a precipitate was visually confirmed or the polymer was swollen and did not dissolve was evaluated as "X".

### <Method for Producing Film>

An evaluation film was produced as follows, and used for the following measurement of tensile modulus, tensile elongation, tensile strength, and dielectric loss tangent.

A solution obtained by dissolving 2 g of each polymer in 8 g of N-methyl-2-pyrrolidone was applied to a copper foil, and then preliminarily dried at 70°C for 3 minutes and then at 130°C for 3 minutes, and a solvent was further evaporated at 150°C for 30 minutes and then at 250°C for 3 hours under a nitrogen atmosphere to form a coating film with a copper foil. The formed coating film with a copper foil was immersed in a 40% iron (III) chloride solution to remove the copper foil, washed with pure water, and then dried at 80°C to prepare an evaluation film.

### <Coatability>

The coatability was evaluated according to the following criteria by visually observing the appearance of the coating film formed on a copper foil in the method for producing a film.

"O": A uniform film without unevenness in thickness is formed on a copper foil without repelling, and a coating film without peeling from the copper foil was formed.

"X": Repelling occurs on a copper foil, a coating film is peeled off from the copper foil, and/or a non-uniform coating film, for example, having unevenness in thickness is formed.

### <Tensile Modulus, Tensile Elongation, and Tensile Strength>

The tensile modulus, the tensile elongation, and the tensile strength were measured by cutting the produced evaluation film into a shape of a dumbbell-shape type 7 described in JIS K 6251: 2017, and performing a tensile test under the conditions at room temperature and 5.0 mm/min using a small desktop tester ("EZ-LX" manufactured by Shimadzu Corporation).

### <Adhesion to Copper Foil>

A solution obtained by dissolving 2 g of each polymer in 8 g of N-methyl-2-pyrrolidone was applied to a copper foil (CF-T9DA-SV [manufactured by Fukuda Metal Foil & Powder Co., Ltd.]), and then preliminarily dried at 70°C for 3 minutes and then at 130°C for 3 minutes, and a solvent was further evaporated at 150°C for 30 minutes and then at 250°C for 3 hours under a nitrogen atmosphere to obtain a laminate including a polymer layer and a copper foil. The obtained laminate was cut into a size of 5 mm in width × 10 cm in length, and pulled in a 90 degree direction at 500 mm/min using "Instron 5567" manufactured by Instron, and the adhesion strength between the polymer layer and the copper foil was evaluated in accordance with "IPC-TM-650 2.4.9".

A case where the adhesion strength was 0.3 N/mm or more was evaluated as "O", and a case where the adhesion strength was less than 0.3 N/mm was evaluated as "X".

### <Adhesion to Gold Base Material>

A solution obtained by dissolving 2 g of each polymer in 8 g of N-methyl-2-pyrrolidone was formed into a film on a gold sputtering wafer by spin coating, and then preliminarily dried at 70°C for 5 minutes and then at 150°C for 5 minutes, and a solvent was further evaporated at 250°C for 1 hour under a nitrogen atmosphere to form a coating film. A stud pin with an epoxy resin was fixed to a surface of the coating film such that the formed coating film came into contact with the epoxy resin, and this was cured at 160°C for 1 hour, and adhesion between a gold sputtering wafer and the formed coating film was evaluated under a measurement condition of 20 N/s using a thin film adhesion strength measuring machine (manufactured by Quad Group Inc.).

A case where the epoxy resin of the stud pin was broken was evaluated as "O", and a case where the coating film was peeled off at an interface with the gold sputtering wafer was evaluated as "X".

### <Dielectric Loss Tangent>

A test piece (width: 6 cm × length: 6 cm) was cut out from the produced evaluation film, and a dielectric loss tangent of the test piece at 10 GHz was measured using a cavity resonator method (dielectric constant measurement system TE mode resonator, manufactured by AET, Inc).

### [Table 1]

**Table 1**

| | Mw | Tg (°C) | TMA inflection point (°C) | Td5 (°C) | CHN solubility | CPN solubility | Coatability |
|---|---|---|---|---|---|---|---|
| Example 1 | 24,000 | 23 | - | 450 | O | O | O |
| Example 2 | 24,000 | 3 | - | 440 | O | O | O |
| Example 3 | 12,000 | 26 | - | 403 | O | O | O |
| Example 4 | 15,000 | 26 | - | 470 | O | O | O |
| Example 5 | 22,000 | 26 | - | 480 | O | O | O |
| Example 6 | 32,000 | 28 | - | 470 | O | O | O |
| Example 7 | 45,000 | 27 | - | 480 | O | O | O |
| Example 8 | 8,000 | 26 | - | 401 | O | O | O |
| Comparative Example 1 | Unable to measure due to crosslinking | - | 38 | 410 | O | O | X |
| Comparative Example 2 | Unable to measure due to crosslinking | - | 35 | 370 | O | O | X |
| Comparative Example 3 | 57,000 | 198 | - | 367 | X | X | X |
| Comparative Example 4 | 38,000 | 181 | - | - | X | X | X |
| Comparative Example 5 | 63,000 | 241 | - | 426 | X | X | O |
| Comparative Example 6 | 17,000 | 185 | - | 411 | X | X | X |
| Comparative Example 7 | 26,000 (Soluble portion) | - | - | - | X | X | X |
| Comparative Example 8 | 43,000 | 233 | - | 475 | X | X | O |
| Comparative Example 9 | 157,000 | 240 | - | 519 | X | X | X |

**Table 1 (continued)**

| | Tensile modulus (GPa) | Tensile elongation (%) | Tensile strength (MPa) | Adhesion to copper foil | Adhesion to gold base material | Dielectric loss tangent (10 GHz) |
|---|---|---|---|---|---|---|
| Example 1 | 0.2 | 170 | 16 | - | O | 0.0029 |
| Example 2 | - | - | - | - | O | 0.0024 |
| Example 3 | 0.2 | 180 | 23 | O | O | 0.0040 |
| Example 4 | 0.2 | 220 | 19 | O | O | 0.0023 |
| Example 5 | 0.2 | 300 | 30 | O | O | 0.0028 |
| Example 6 | 0.2 | 220 | 18 | O | O | 0.0027 |
| Example 7 | 0.2 | 450 | 38 | O | O | 0.0025 |
| Example 8 | 0.2 | 190 | 23 | - | - | 0.0030 |
| Comparative Example 1 | 0.2 | 150 | 20 | X | X | 0.0018 |
| Comparative Example 2 | 0.2 | 60 | 30 | X | O | 0.0170 |
| Comparative Example 3 | 3.6 | 3.2 | 98 | - | - | 0.0071 |
| Comparative Example 4 | 2.9 | 3 | 80 | - | - | 0.0074 |
| Comparative Example 5 | 4 | 8 | 135 | - | O | 0.0110 |
| Comparative Example 6 | - | - | - | - | - | - |
| Comparative Example 7 | - | - | - | - | - | - |
| Comparative Example 8 | - | - | - | X | X | - |
| Comparative Example 9 | 3.2 | 2 | 57 | X | X | 0.0011 |

As is apparent from Table 1, it was found that the polymers obtained in Examples had excellent heat resistance and mechanical properties, and also had excellent solubility in a general-purpose organic solvent and coatability on a base material.

In particular, it was found that the polymers obtained in Examples 1, and 3 to 7 have a Td5 of 403°C to 480°C, exhibit an elongation (tensile elongation) of 170% to 450%, are soluble in cyclohexanone (evaluation: O), and have excellent coatability on a base material and adhesion to a base material such as a gold base material or a copper base material.

From these results, it was confirmed that the present polymer has a high thermal decomposition temperature, and has excellent mechanical properties (particularly, tensile elongation), solubility in an organic solvent, and adhesion to a base material such as a gold base material and a copper base material. The present polymer as above can be suitably used for various electronic member applications.

On the other hand, the polymer obtained in Comparative Example 1 had a Td5 of 410°C, but had a low tensile elongation of 150%, poor coatability, and poor adhesion to a base material.

The polymer obtained in Comparative Example 2 had a low tensile elongation of 60%, poor coatability, and although adhesion to a gold base material was excellent, but adhesion to a copper base material was poor.

The polymers obtained in Comparative Examples 3 to 9 had poor solubility in a general-purpose organic solvent such as cyclohexanone and cyclopentanone.

## Claims

1. A polymer having repeating units composed of only repeating units represented by the following Formula (1): 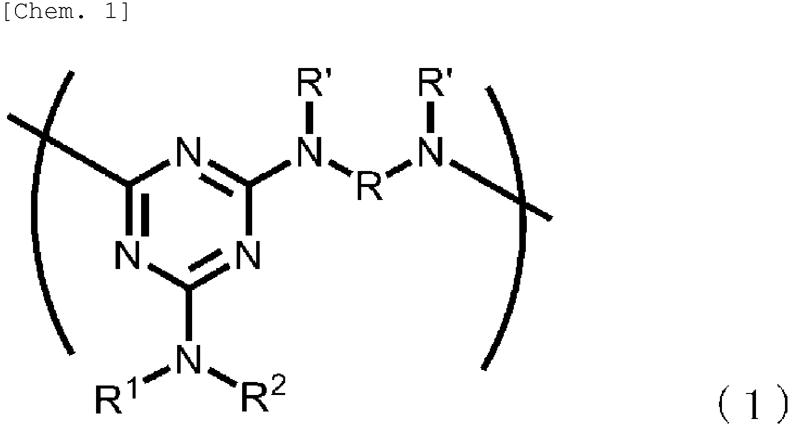 wherein in Formula (1), -N(R')-R-N(R')- is a structure derived from a dimer diamine which is unsubstituted or substituted with a substituent, and R', R¹, and R² are each independently a hydrogen atom, a halogen atom, a hydrocarbon group having 1 to 20 carbon atoms which is unsubstituted or substituted with a substituent, or a heterocyclic aromatic group having 3 to 20 carbon atoms which is unsubstituted or substituted with a substituent.

2. The polymer according to claim 1, which has a weight average molecular weight (Mw) in terms of polystyrene of 1,000 to 400,000.
